# EUROPÄISCHE PATENTSCHRIFT

(11) **EP 0 733 540 B1**
(45) Veröffentlichungstag und Bekanntmachung des Hinweises auf die Patenterteilung: **12.11.1997**
(21) Anmeldenummer: 95104195.3
(22) Anmeldetag: 22.03.1995
(51) Int. Cl.: B62D 25/04, B62D 29/00, B21D 26/02

(54) **Hohlprofil für eine Trägerstruktur eines Kraftfahrzeuges**
Hollow beam for a structural frame of a motor vehicle
Profilé creux pour structure porteuse de véhicule à moteur

(43) Veröffentlichungstag der Anmeldung: 25.09.1996
(73) Patentinhaber: Dr.Ing.h.c. F. Porsche Aktiengesellschaft, 70435 Stuttgart (DE); REGIE NATIONALE DES USINES RENAULT S.A., 92109 Boulogne Billancourt Cédex (FR)
(72) Erfinder: Vlahovic, Josip, D-74321 Bietigheim-Bissingen (DE)

(56) Entgegenhaltungen:
- DE-A- 4 139 305
- DE-A- 4 311 909
- DE-C- 4 214 557
- US-A- 4 826 238

## Beschreibung

Die Erfindung betrifft ein Verfahren zur Herstellung eines Hohlprofils für eine Trägerstruktur eines Kraftfahrzeuges, das durch hydraulisches Aufweiten (Innenhochdruck-Umformen) eines vorprofilierten Ausgangsteils gebildet wird und in Längsrichtung des Hohlprofiles unterschiedliche Querschnitte aufweist.

Die DE 42 14 557 C2 beschreibt ein Verfahren nach dem Oberbegriff des Anspruchs 1 zur Herstellung von geschlossenen Hohlprofilen durch hydraulisches Aufweiten eines rohrförmigen Ausgangsteils (Rohling). Diese Hohlprofile finden Verwendung im Kraftfahrzeug-Karosseriebau, beispielsweise als Türsäulen.

Nachteilig an diesen bekannten Hohlprofilen ist, daß sie konstante Wanddicke aufweisen und Stellen, an denen später Bauteile, wie z.B. Türscharniere, Schloßbolzen oder Gurtbefestigungen anzubringen sind, mit Verstärkungen versehen werden müssen. Das nachträgliche Anbringen von Verstärkungen ist kostenintensiv, arbeitsaufwendig und erhöht das Gewicht des Hohlprofils.

Aus der US-A-4,826,238 geht ein Hohlprofil für eine Trägerstruktur eines Kraftfahrzeuges hervor, wobei das durch ein Strangpreßprofil gebildete Hohlprofil - im Querschnitt gesehen - bereichsweise unterschiedliche Wanddicken aufweist. Dieses Hohlprofil wird nicht hydraulisch aufgeweitet und weist entlang seiner Längserstreckung einen gleichbleibenden Querschnitt auf.

Aufgabe der Erfindung ist es, ein Verfahren zur Herstellung eines Hohlprofils für eine Trägerstruktur eine Kraftfahrzeuges zu schaffen, mit dem das nachträgliche Anbringen von Verstärkungen vermieden wird.

Erfindungsgemäß wird diese Aufgabe durch die kennzeichnenden Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Ausgestaltung der Hohlprofile als Strangpreßprofile mit Bereichen unterschiedlicher Wanddicke die Hohlprofile in einem Arbeitsgang den mechanischen Anforderungen entsprechend kostengünstig gefertigt werden können.

An Hohlprofilen für Trägerstrukturen werden Bauteile, wie z.B. Türscharniere, Schloßbolzen oder Gurtbefestigungen angebracht. Hierfür ist eine lokale Verstärkung des Hohlprofils erforderlich. Eine Ausführung des gesamten Hohlprofils in verstärkter Wanddicke, um der örtlich erforderlichen mechanischen Festigkeit nachzukommen, würde zu einer unnötigen Gewichtserhöhung führen. Deshalb sieht die Erfindung vor, die Wandstärke des Ausgangsteils so zu wählen, daß das im Innenhochdruck-Umformverfahren hergestellte Hohlprofil an der erforderlichen Stelle die nötige Wanddicke aufweist.

Die vorzugsweise aus Leichtmetall (z.B. Aluminium oder eine Aluminiumlegierung) gefertigten Hohlprofile weisen ein geringes Gewicht auf. Die Herstellung im Innenhochdruck-Umformverfahren ermöglicht Hohlprofile mit unterschiedlichem Profil- und Querschnittsverlauf zu fertigen.

Ausführungsbeispiele der Erfindung sind in den Zeichnungen dargestellt und werden im folgenden näher beschrieben.

Es zeigt
Fig. 1 ein typisches Hohlprofil wie z.B. eine B-Säule eines Kraftfahrzeuges,
Fig. 2 einen Schnitt nach der Linie II-II der Fig. 1 für ein erstes Querschnittsprofil eines Hohlprofils (gestrichelte Linien), Rohling (ausgezogene Linien),
Fig. 3 einen Schnitt entsprechend Fig. 2 einer zweiten Ausführungsform eines Querschnittsprofils eines Hohlprofils (gestrichelte Linien), Rohling (ausgezogene Linien), und
Fig. 4 ein Werkzeug zur Herstellung eines Hohlprofils.

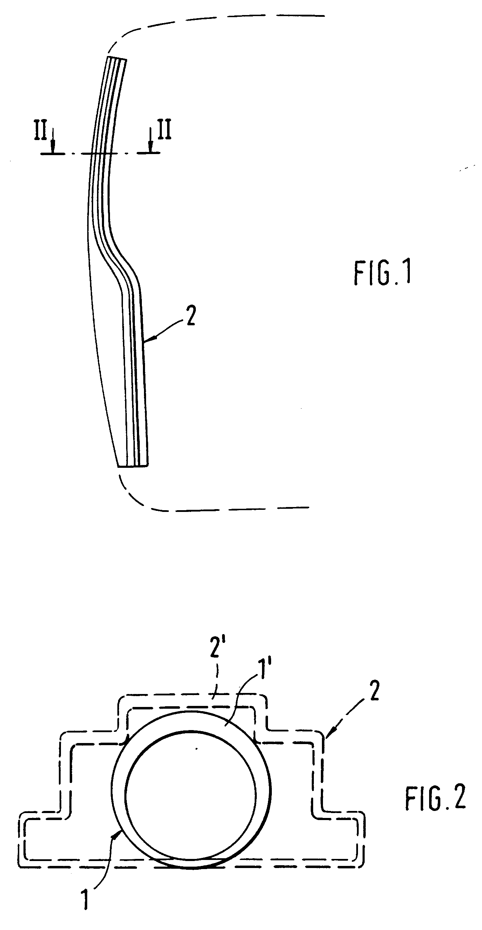

In Fig. 1 ist ein Hohlprofil 2, in diesem Fall eine Türsäule für einen Fahrzeug-Rahmen in Space-Frame-Bauweise, gezeigt. Dieses Hohlprofil verläuft vertikal in verschiedenen Ebenen und weist ein Querschnittsprofil auf, wie es z.B. in Fig. 2 (gestrichelte Linien) dargestellt ist. Die Wandstärke des Ausgangsprofils 1 ist so gewählt, daß das im Innenhochdruck-Umformverfahren hergestellte Hohlprofil 2 in Bereichen 2' die erforderliche Wandstärke für die Befestigung von Bauteilen, wie z.B. Türscharniere, Schloßbolzen oder Gurtbefestigungen aufweist.

Soll das Hohlprofil 2 der Fig. 2 im Bereich 2' eine verstärkte Wanddicke aufweisen, so wird ein Rohling 1 in Form z.B. eines runden Strangpreßprofils mit größerer Wandstärke im Bereich 1' gewählt, um nach dem hydraulischen Aufweiten auch am fertigen Hohlprofil 2 an der Stelle 2' eine größere Wandstärke zu erhalten.

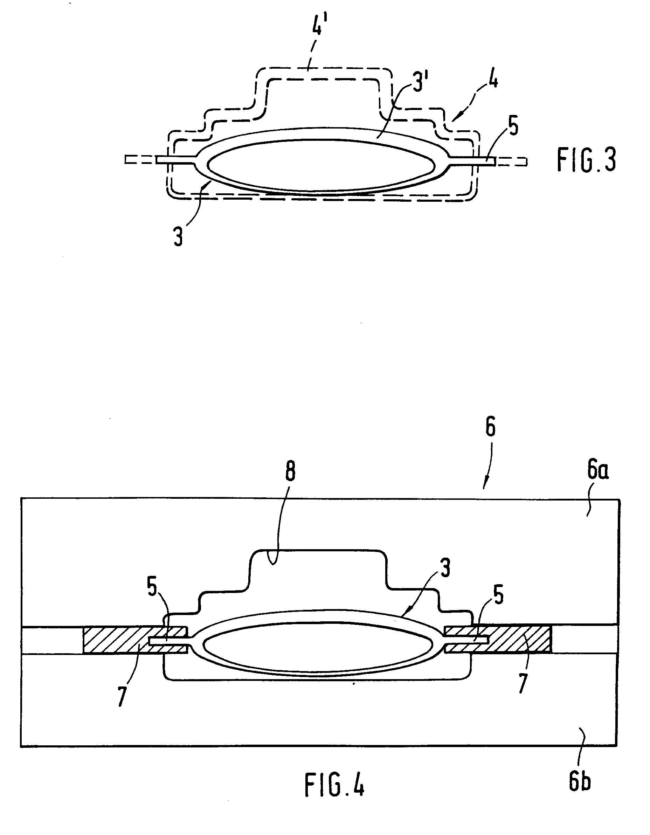

In Fig. 3 ist eine weitere Ausführung eines Querschnittprofils 4 dargestellt, bei der ausgehend von einem ovalen Strangpreßprofil 3 als Rohling, mit größerer Wandstärke im Bereich 3' ein Hohlprofil 4 durch hydraulisches Aufweiten gebildet wird, das im Bereich 4' eine verstärkte Wandung für die Befestigung von Bauteilen aufweist. Bei ovalen Strangpreßprofilen hat sich gezeigt, daß eine Fixierung des Rohlings im Werkzeug an seitlichen Stegen 5 die Präzision des Bauteils erhöht, da eine unkontrollierte Lageänderung des Rohlings während der hydraulischen Innenhochdruck-Umformung vermieden wird. Deshalb ist das Strangpreßprofil 3 seitlich mit Stegen 5 versehen, die sowohl der Fixierung des Strangpreßprofils 3 im Werkzeug 6 dienen, als auch später als Halterung für Dichtungsprofile Verwendung finden können.

Fig. 4 zeigt ein Werkzeug 6 zur Herstellung der oben beschriebenen Hohlprofile. Das in Längsrichtung gemäß Fig. 1 vorgeformte Strangpreßprofil 3 wird in das geteilte Werkzeug 6, bestehend aus dem Oberteil 6a und dem Unterteil 6b, eingelegt. Die seitlichen Stege 5 sind in Haltern 7 zur exakten Fixierung des Strangpreßprofils 3 während der hydraulischen Umformung eingeklemmt. Nach Verschließen der offenen Enden des Strangpreßprofils 3 wird dieses hydraulisch derart aufgeweitet, daß es an der Innenkontur 8 des Werkzeuges 6 zur Anlage kommt.

Das Querschnittsprofil des Rohlings 1 ist nicht auf die oben beschriebene runde oder ovale Form begrenzt sondern kann jede, dem Bedarf entsprechende Form aufweisen.

Die Strangpreßprofile 3 sind vorzugsweise aus Leichtmetall (z.B. Aluminium oder eine Aluminiumlegierung) gefertigt. Anstelle von Strangpreßprofilen 3 können jedoch auch nahtlose oder geschweißte Hohlprofile aus Stahl oder Leichtmetall hydraulisch aufgeweitet werden.

## Patentansprüche

1. Verfahren zur Herstellung eines Hohlprofils (2, 4) mit in Längsrichtung unterschiedlichen Querschnitten für eine Trägerstruktur eines Kraftfahrzeuges, wobei das Hohlprofil durch hydraulisches Aufweiten, zum Beispiel Innenhochdruck-Umformen, eines vorprofilierten Ausgangsteils gebildet wird, dadurch gekennzeichnet, daß als Ausgangsteil ein Strangpreßprofil (1, 3) benutzt wird, das im Querschnitt Bereiche (1', 3') mit unterschiedlichen Wanddicken aufweist.

2. Verfahren nach Anspruch 1, **dadurch gekennzeichnet**, daß als Ausgangsteil ein geschlossenes, hohles Strangpreßprofil (1) mit aussen rundem Querschnitt benutzt wird.

3. Verfahren nach Anspruch 1, **dadurch gekennzeichnet**, daß als Ausgangsteil ein geschlossenes, hohles Strangpreßprofil (3) mit ovalem Querschnitt benutzt wird.

4. Verfahren nach Anspruch 1, **dadurch gekennzeichnet**, daß als Ausgangsteil ein geschlossenes, hohles, Strangpreßprofil (3) mit Stegen (5) zur Fixierung in einem Werkzeug (6) und für die Anbringung von Dichtungsprofilen benutzt wird.

5. Verfahren nach den Ansprüchen 1 bis 4, **dadurch gekennzeichnet**, daß als Ausgangsteil ein geschlossenes, hohles Strangpreßprofil aus Leichtmetall, zum Beispiel Aluminium oder eine Aluminiumlegierung, benutzt wird.

## Claims

1. A method of producing a hollow section (2, 4) with different cross-sections in the longitudinal direction for a support structure of a motor vehicle, wherein the hollow section is formed by the hydraulic expansion, for example internal high-pressure shaping, of a pre-profiled starting component, **characterized in that** the starting component used is an extruded profile (1, 3) provided in cross-section with areas (1', 3') of different wall thickness.

2. A method according to Claim 1, **characterized in that** a closed, hollow extruded profile (1) with a cross-section round on the outside is used as the starting component.

3. A method according to Claim 1, **characterized in that** a closed, hollow extruded profile (3) with an oval cross-section is used as the starting component.

4. A method according to Claim 1, **characterized in that** a closed, hollow extruded profile (3) with flanges (5) for fixing in a tool (6) and for the application of profiled joints is used as the starting component.

5. A method according to Claims 1 to 4, **characterized in that** a closed, hollow extruded profile of light metal, for example aluminium or an aluminium alloy, is used as the starting component.

## Revendications

1. Procédé de fabrication d'un profilé creux (2, 4) avec des sections transversales différentes dans le sens de la longueur, pour une structure portante d'un véhicule automobile, le profilé creux étant formé par élargissement hydraulique, par exemple déformation sous haute pression intérieure, d'un élément initial préprofilé, caractérisé en ce qu'on utilise comme élément initial un profilé extrudé (1,3) qui présente, dans la section transversale, des zones (1', 3') d'épaisseurs de paroi différentes.

2. Procédé selon la revendication 1, caractérisé en ce qu'on utilise comme élément initial un profilé extrudé (1) creux, fermé, avec section transversale extérieurement ronde.

3. Procédé selon la revendication 1, caractérisé en ce qu'on utilise comme élément initial un profilé extrudé (3) creux, fermé, de section transversale ovale.

4. Procédé selon la revendication 1, caractérisé en ce qu'on utilise comme élément initial un profilé extrudé (3) creux, fermé, avec des barrettes (5) pour la fixation dans un outil (6) et pour l'application de profilés d'étanchéité.

5. Procédé selon les revendications 1 à 4, caractérisé en ce qu'on utilise comme élément initial un profilé extrudé creux, fermé en métal léger, par exemple en aluminium ou en un alliage d'aluminium.
